# EUROPEAN PATENT APPLICATION

(11) **EP 3 819 847 A1**
(43) Date of publication of application: **12.05.2021**
(21) Application number: 19830326.5
(22) Date of filing: 04.07.2019
(51) Int. Cl.: G06Q 20/32, G06Q 20/06

(54) **PORTABLE DEVICE AND ELECTRONIC SETTLEMENT METHOD**

(30) Priority: 05.07.2018 JP 2018128419
(71) Applicant: Digital Arts Inc., Tokyo 100-0004 (JP)
(72) Inventor: DOGU Toshio, Tokyo 100-0004 (JP)
(74) Representative: Liesegang, Eva
(86) International application number: PCT/JP2019/026725
(87) International publication number: WO 2020/009205

(57) **Abstract**

A mobile device 10 comprises: a store information collection unit 201 that records store information which identifies each of the stores when the electronic payment is executed; a maximum amount setting unit 202 that sets a maximum of a usage amount in a preliminary payment for executing payment in the mobile device in a case where the electronic payment with the electronic payment terminal becomes impossible; a payment execution unit 203 that receives payment information including the usage amount within the set maximum and the store information, and executes the preliminary payment; and a payment information transmission unit 204 that transmits the payment information corresponding to the executed preliminary payment.

## Description

### Technical Field

The embodiment of the present invention relates to mobile device and electronic payment method.

### Background Art

As typified by electronic money, electronic payment is widely used in which the monetary value held by a user is stored in an IC card, and payment is made by exchanging electronic data. Further, the use of payment methods for executing electronic payments by mounting IC chips for electronic payments on mobile devices such as smartphones is also widespread from the viewpoint of convenience.

Conventionally, a technology for enhancing the convenience of transactions by electronic payment has been disclosed. For example, a technology is disclosed which carries out payment in two divided stages in which a provisional payment is made at the time of reserve so as to enable electronic payment of the reserved product, and then an actual payment is executed.

### Citation List

### Patent Literature

Patent Literature 1: JP 2013-214177 A

### SUMMARY OF INVENTION

### PROBLEM TO BE SOLVED BY INVENTION

Incidentally, in the electronic payment using electronic money, it is necessary that an electronic payment terminal on a store side which accepts payment from a user is in operation. In a case where a power outage occurs due to a power system failure or the like so that power is not supplied to the electronic payment terminal on the store side, and the terminal cannot operate, the user cannot use the electronic payment using electronic money.

The present invention has been made in consideration of such circumstances, and an object thereof is to provide a mobile device and an electronic payment method capable of realizing electronic payment at a store even in a case where an electronic payment terminal of the store becomes unavailable due to a power outage or the like.

### MEANS FOR SOLVING PROBLEM

A mobile device according to an embodiment of the present invention comprises:
a store information collection unit that records store information which identifies each of the stores when the electronic payment is executed;
a maximum amount setting unit that sets a maximum of a usage amount in a preliminary payment for executing payment in the mobile device in a case where the electronic payment with the electronic payment terminal becomes impossible;
a payment execution unit that receives payment information including the usage amount within the set maximum and the store information, and executes the preliminary payment; and
a payment information transmission unit that transmits the payment information corresponding to the executed preliminary payment.

### EFFECT OF INVENTION

By an embodiment of the present invention, a mobile device and an electronic payment method capable of realizing electronic payment at a store even in a case where an electronic payment terminal of the store becomes unavailable due to a power outage or the like are provided.

### BRIEF DESCRIPTION OF DRAWINGS

Fig. 1 is an explanatory diagram illustrating an example of an electronic payment system using a mobile device according to an embodiment.
Fig. 2 is a configuration diagram illustrating a configuration of the mobile device according to the embodiment.
Fig. 3(A) is an explanatory diagram illustrating an example of electronic payment between the mobile device of a user and an electronic payment terminal of a store, and Fig. 3(B) is a diagram illustrating an example of store information of each store collected by a store information collection unit.
Fig. 4 is a diagram illustrating an example of setting a maximum of a usage amount available to the user in a case where the electronic payment terminal of the store is unavailable.
Fig. 5 is an explanatory diagram illustrating an example of a preliminary payment display screen on the mobile device in a case where the electronic payment terminal of the store becomes unavailable.
Fig. 6 is a configuration diagram illustrating an example of a processing flow of the electronic payment method according to the embodiment.

### Description of Embodiments

Hereinafter, an embodiment of the present invention will be described with reference to the accompanying drawings.

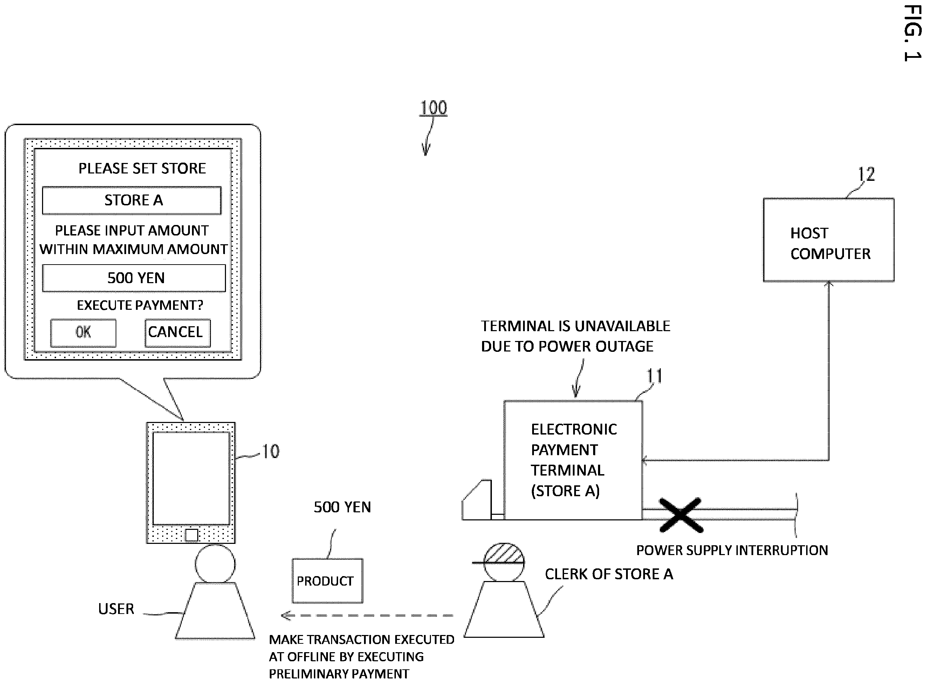

Fig. 1 is an explanatory diagram illustrating an example of an electronic payment system 100 using a mobile device 10 according to the embodiment.

The electronic payment system 100 includes the mobile device 10, an electronic payment terminal 11, and a host computer 12.

The mobile device 10 is a mobile communication device such as a tablet or a smartphone. The mobile device 10 has a function capable of making a payment by transmitting/receiving electronic data to and from the electronic payment terminal 11 arranged in a store (for example, a retail store). When money is charged to the mobile device 10, electronic money is held inside the device, and the electronic money is used to realize electronic payment between the mobile device 10 and the electronic payment terminal 11. Further, the mobile device 10 may have a function of recording the registration information of the credit card possessed by the user and executing credit payment with the electronic payment terminal 11.

The electronic payment terminal 11 is a terminal for accepting payment processing by the user. The electronic payment terminal 11 performs electronic payment processing on the basis of data such as the electronic money held by the user and the data of the product purchased by the user by performing wireless communication with the mobile device 10, and accepts the payment processing by the user.

The host computer 12 is connected to the electronic payment terminal 11 via a network, receives payment information (such as a product name and a product price) related to the product purchased by the user from the electronic payment terminal 11 of the store, and executes sales-related processing on the basis of the payment information. Further, in a case where the user executes payment processing using the credit card, the host computer 12 receives the payment information together with the credit card information of the user and executes sales-related processing.

The mobile device 10 according to the embodiment receives the input of the store information of the store which is acquired in advance when the electronic payment with the electronic payment terminal 11 is available (normal time) and the usage amount within the maximum amount that the user can pay and executes preliminary payment inside the mobile device 10. Then, the payment information corresponding to the executed preliminary payment is automatically transmitted to the store side. Accordingly, even in a case where the electronic payment terminal 11 of the store becomes unavailable, the electronic payment at the store can be realized. Here, the preliminary payment means that an offline payment is made inside the mobile device 10 in a state where the electronic payment terminal 11 is unavailable.

A specific configuration of the mobile device 10 according to the embodiment will be described.

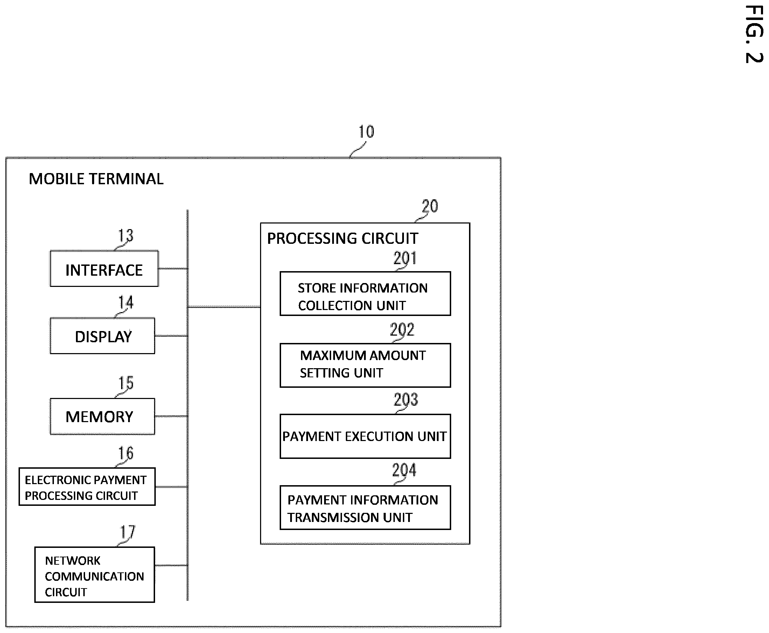

Fig. 2 is a configuration diagram illustrating a configuration of the mobile device 10 according to the embodiment.

The mobile device 10 includes an interface 13, a display 14, a memory 15, an electronic payment processing circuit 16, and a network communication circuit 17.

The interface 13 receives various input operations from the user, converts the received input operations into electric signals, and outputs the electric signals to a processing circuit 20. For example, the interface 13 receives the setting of information related to the preliminary payment such as the store information of the store where the user purchases the product and the usage amount of the user at the time of the preliminary payment executed inside the mobile device 10.

The display 14 displays various kinds of information. For example, the display 14 displays the maximum of the usage amount of the user or an input screen at the time of preliminary payment.

The memory 15 has a configuration including a recording medium, such as a semiconductor memory element such as a RAM (Random Access Memory) or a flash memory, which can be read by a processor. For example, the memory 15 holds store information or the like which is acquired from the electronic payment terminal 11 when electronic payment is executed with the electronic payment terminal 11 of the store.

The electronic payment processing circuit 16 is a circuit for executing electronic payment with the electronic payment terminal 11. Examples of the electronic payment processing circuit 16 include a non-contact type IC chip capable of wireless communication. The electronic payment processing circuit 16 holds the electronic money charged by the user and exchanges electronic data with the electronic payment terminal 11 to perform electronic payment.

The network communication circuit 17 is a circuit for communicating with an external communication device. The network communication circuit 17 may be configured to be connectable to the host computer 12 via the Internet or the like.

The processing circuit 20 is a processor which controls the overall operation of the mobile device 10 by reading and executing the program stored in the memory 15.

The processing circuit 20 includes a store information collection unit 201, a maximum amount setting unit 202, a payment execution unit 203, and a payment information transmission unit 204. Incidentally, the function of each unit configuring the processing circuit 20 is realized by executing a predetermined program code by using a processor.

The store information collection unit 201 records the store information which identifies each of the stores when the electronic payment is executed. The store information is information for identifying each of the stores, and means the name data of the store, the identifier assigned to identify each of the stores, and the address data of the store. At the time of electronic payment, the store information collection unit 201 acquires at least one of the store name data, the identifier, and the store address data in order to acquire the information for identifying the store.

When the user executes electronic payment at an arbitrary store, the store information collection unit 201 acquires the store information from the electronic payment terminal 11 of the store and accumulates the store information of the store. In this way, before the electronic payment terminal 11 is stopped due to a power outage or the like, that is, when the electronic payment can be effectively executed, the store information is accumulated through the electronic payment to increase the number of stores where preliminary payment can be executed in a case where the electronic payment terminal 11 is unavailable.

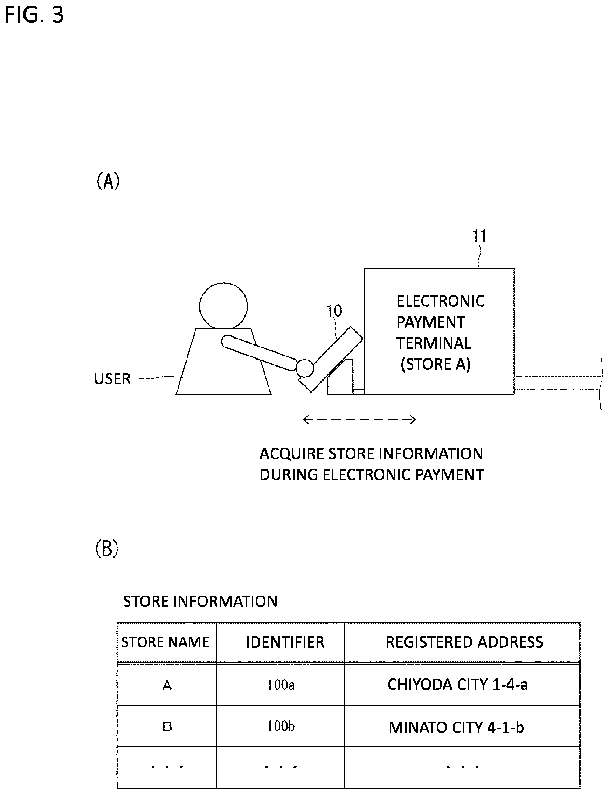

Fig. 3(A) is an explanatory diagram illustrating an example of electronic payment between the mobile device 10 of the user and the electronic payment terminal 11 of a store A. Fig. 3(B) is a diagram illustrating an example of the store information, which is collected by the store information collection unit 201, of each store.

As illustrated in Fig. 3(A), when the user executes electronic payment with the electronic payment terminal 11 of the store A by using the mobile device 10, the mobile device 10 acquires and stores the store information of the store A from the electronic payment terminal 11. Similarly, when executing electronic payment with the electronic payment terminal 11 of a store B, the mobile device 10 acquires and stores the store information of the store B from the electronic payment terminal 11. When the user makes an electronic payment with the electronic payment terminal 11 of each store, the store information of each store is acquired, and the store information is accumulated.

The mobile device 10 may acquire information on the product group sold in the store and the prices corresponding to those products in addition to the store information at the time of electronic payment.

In a case where the electronic payment with the electronic payment terminal 11 becomes unavailable, the maximum amount setting unit 202 sets the maximum of the usage amount in the preliminary payment for executing the payment in the mobile device 10. In detection of a state where electronic payment is unavailable, information that electronic payment is unavailable may be detected by user input, or a configuration may be made such that electronic payment becomes impossible when electronic payment is executed on the mobile device 10, and no response is received from the electronic payment terminal 11 side.

The maximum amount setting unit 202 sets the maximum of the usage amount on the basis of the electronic money existing inside the mobile device 10. Alternatively, the maximum amount setting unit 202 may set the maximum of the usage amount on the basis of the available amount corresponding to the credit card registered in the mobile device 10. The maximum of the usage amount may be set by combining these setting methods. In this case, one of them may be set as the initial maximum amount in advance, and in a case where one of them is insufficient, the setting method may be switched to the other.

The user may acquire electronic data having monetary value in advance and set the electronic data as the maximum amount at the time of preliminary payment. For example, the electronic money is registered in the mobile device 10 by inputting the identification number attached to the electronic money purchased in advance or reading the barcode, and the electronic money is set as the maximum amount at the time of preliminary payment.

Incidentally, in a case where the maximum amount is set on the basis of the available amount corresponding to the credit card registered in the mobile device 10, the available amount of the credit card may be set as the maximum amount, or a value obtained by multiplying the available amount by a predetermined ratio may be set as the maximum amount from the viewpoint of setting the amount within the range that the user can reliably pay.

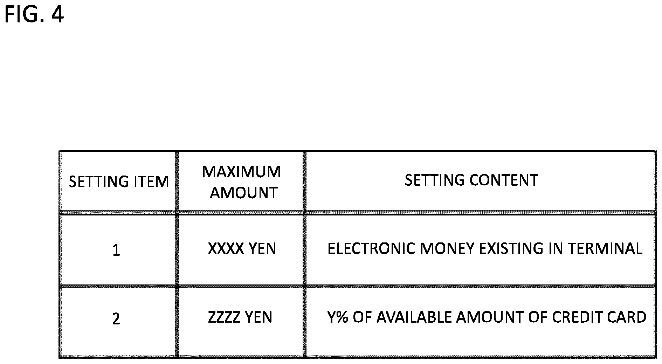

Fig. 4 is a diagram illustrating an example of setting a maximum amount that can be used by the user in a case where electronic payment with the electronic payment terminal 11 of the store becomes impossible.

In setting item No. 1, in a case where electronic payment with the electronic payment terminal 11 becomes impossible, the electronic money existing in the mobile device 10 is set to the maximum amount that can be used by the user at the time of preliminary payment. In setting item No. 2, Y% of the available amount of the credit card registered in the mobile device 10 is set to the maximum amount that can be used by the user at the time of preliminary payment.

The payment execution unit 203 receives the usage amount within the set maximum and the store information from the user and executes the preliminary payment. The payment information corresponding to the executed preliminary payment is stored in association with the information such as the execution date and time of the payment. The payment information corresponding to the preliminary payment includes the usage amount and the store information, and in a case where the available amount of the credit card is used for the preliminary payment, the credit card information is also included in the payment information.

In a case where electronic money is used for preliminary payment, when the preliminary payment is executed, the electronic money equivalent to the used amount is consumed, and the maximum amount is reduced. In a case where the available amount of the credit card is used for the preliminary payment, when the preliminary payment is executed, the available amount decreases, and the maximum amount decreases.

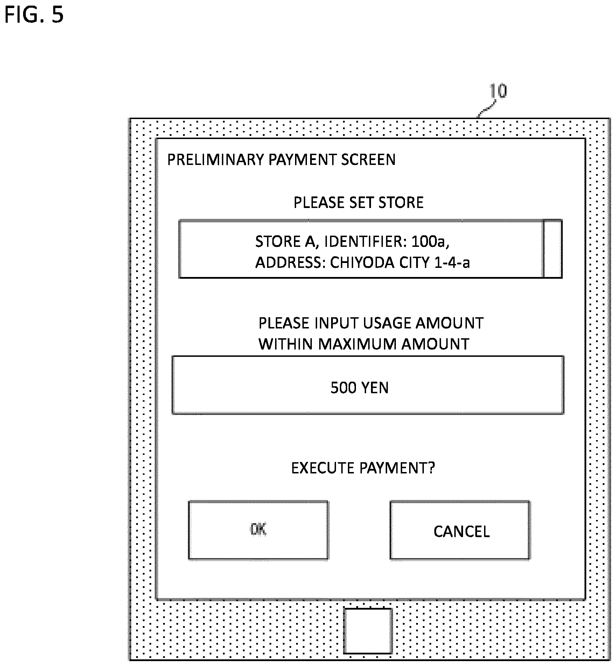

Fig. 5 is a diagram illustrating a display screen of preliminary payment in the mobile device 10 in a case where the electronic payment terminal 11 of the store becomes unavailable.

From the store information acquired in advance, the user selects the information of the store where the product is to be purchased and inputs the price of the product within the range of the set maximum amount. Then, by pressing the "OK" button which means execution of payment, the intention of payment is confirmed, and preliminary payment is executed.

A store clerk can confirm that the store is correctly selected by confirming the identifier in the store information column displayed on the mobile device 10. Incidentally, in a case where the mobile device 10 acquires the product information sold in the store in advance, the price of the target product may be input by selecting the product instead of directly inputting the price. Further, the mobile device 10 may read the barcode of the target product to input the price of the target product. In this case, the mobile device 10 acquires a correspondence list having the corresponding relation between the barcode of the product and the price of the product in advance.

The payment information transmission unit 204 automatically transmits the payment information corresponding to the executed preliminary payment to the store side. Specifically, the payment information corresponding to the preliminary payment is automatically transmitted from the mobile device 10 to the electronic payment terminal 11 when the user uses the electronic payment terminal 11 after the electronic payment terminal 11 is restored from a power failure such as a power outage. The electronic payment terminal 11 which transmits payment information is not limited to the electronic payment terminal 11 of the store in which the transaction of the preliminary payment is executed, and may be an electronic payment terminal of another store which can perform the same electronic payment as that of the corresponding terminal. Further, in a case where the mobile device 10 can transmit data to the host computer 12 of the store via the Internet or the like, the payment information may be automatically transmitted to the host computer 12 connected to the electronic payment terminal 11, and the payment information may be automatically transmitted to the electronic payment terminal 11 or the host computer 12 by using wireless communication.

For example, as illustrated in Fig. 1, a case will be considered in which the user purchases a product of 500 yen at the store A when a power outage occurs due to a power system failure, and the electronic payment terminal 11 cannot be used. At this time, the mobile device 10 receives the input of the store information of the store A which is acquired in advance when the electronic payment with the electronic payment terminal 11 is available and the amount of 500 yen which is the amount within the usage limit that the user can pay and executes preliminary payment inside the mobile device 10. By executing the preliminary payment, the product purchased by the user is delivered to the user from the clerk of the store A. Then, the payment information corresponding to the executed preliminary payment is automatically transmitted to the store A side. In this way, even in a case where the electronic payment terminal 11 of the store becomes unavailable, the electronic payment at the store can be realized.

Subsequently, the operation of the mobile device 10 according to the embodiment will be described.

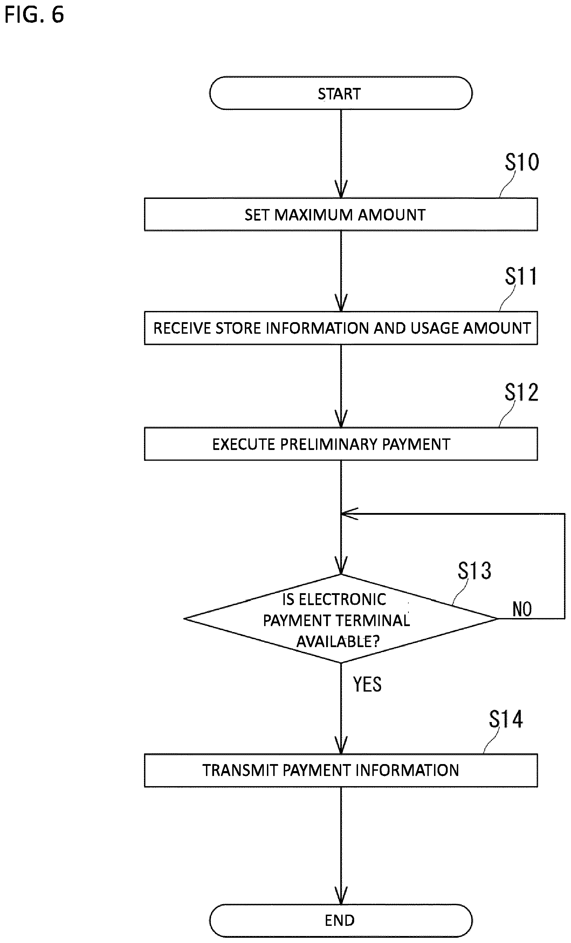

Fig. 6 is a configuration diagram illustrating an example of a processing flow of the electronic payment method according to the embodiment (see Figs. 1 and 2 as appropriate). Here, it is assumed that the store information that identifies each of the stores is recorded when the electronic payment is executed.

In a case where the electronic payment with the electronic payment terminal 11 becomes unavailable, the maximum amount setting unit 202 sets the maximum of the usage amount in the preliminary payment for executing the payment in the mobile device 10 (S10).

The payment execution unit 203 receives the usage amount within the set maximum amount and the store information (S11). Then, when receiving the execution of the preliminary payment from the user, the payment execution unit 203 executes the preliminary payment on the basis of the input usage amount and the store information (S12). In a case where electronic money is used for preliminary payment, when the preliminary payment is executed, the electronic money equivalent to the usage amount is consumed.

In a case where the electronic payment terminal 11 is unavailable, the payment information transmission unit 204 waits until the payment information can be transmitted to the electronic payment terminal 11 of the store (S13: NO, S14) .

On the other hand, when the electronic payment terminal 11 becomes available, the payment information transmission unit 204 automatically transmits the payment information to the electronic payment terminal 11 (S13: YES, S14). In the transmission of the payment information, in a case where data can be transmitted from the mobile device 10 to the host computer 12 on the store side, the payment information may be automatically transmitted to the host computer 12 connected to the electronic payment terminal 11.

In this way, in a mobile device capable of electronic payment, the store information that identifies each of the stores is recorded when executing electronic payment, and the preliminary payment is executed on the basis of the store information and the usage amount in the mobile device. Then, the payment information corresponding to the preliminary payment is automatically transmitted to the store side. Accordingly, even in a case where the electronic payment terminal of the store becomes unavailable due to a power outage or the like, the electronic payment at the store can be realized.

Incidentally, in the above-described embodiment, the word "processor" refers to, for example, a dedicated or general-purpose CPU (Central Processing Unit), GPU (Graphics Processing Unit) or a circuit such as an application-specific integrated circuit (ASIC) mounted on the mobile device 10. The processor realizes various functions of the processing circuit 20 by reading and executing a program stored in the storage medium.

Although some embodiments of the present invention have been described, these embodiments are presented as examples and are not intended to limit the scope of the invention. These novel embodiments can be implemented in various other embodiments, and various omissions, replacements, and changes can be made without departing from the gist of the invention. These embodiments and modifications thereof are included in the scope and gist of the invention, and are also included in the scope of the invention described in the claims and the equivalent scope thereof.

### Reference Signs List

- 10: Mobile device
- 11: Electronic payment terminal
- 12: Host computer
- 13: Interface
- 14: Display
- 15: Memory
- 16: Electronic payment processing circuit
- 17: Network communication circuit
- 20: Processing circuit
- 201: Store information collection unit
- 202: Maximum amount setting unit
- 203: Payment execution unit
- 204: Payment information transmission unit
- 100: Electronic payment system

## Claims

1. A mobile device which is capable of electronic payment with electronic payment terminals of stores, the mobile device comprising:
a store information collection unit that records store information which identifies each of the stores when the electronic payment is executed;
a maximum amount setting unit that sets a maximum of a usage amount in a preliminary payment for executing payment in the mobile device in a case where the electronic payment with the electronic payment terminal becomes impossible;
a payment execution unit that receives payment information including the usage amount within the set maximum and the store information, and executes the preliminary payment; and
a payment information transmission unit that transmits the payment information corresponding to the executed preliminary payment.

2. The mobile device according to claim 1, wherein
the store information collection unit collects during the electronic payment at least one of name data of the stores, an identifier assigned to identify each of the stores, and address data of the stores.

3. The mobile device according to claim 1, wherein
the maximum amount setting unit sets a maximum of the usage amount on a basis of electronic money existing in the mobile device.

4. The mobile device according to claim 1, wherein
the maximum amount setting unit sets a maximum of the usage amount on a basis of an available amount corresponding to a credit card of a user.

5. The mobile device according to claim 1, wherein
the payment information transmission unit transmits the payment information corresponding to the executed preliminary payment to the electronic payment terminal including the electronic payment terminal corresponding to the store in which transaction of the preliminary payment is executed, or to a host computer connected to the electronic payment terminal.

6. An electronic payment method, which uses a mobile device which is capable of electronic payment with electronic payment terminals of stores, comprising:
a step of recording store information which identifies each of the stores when the electronic payment is executed;
a step of setting a maximum of a usage amount in a preliminary payment for executing payment in the mobile device in a case where the electronic payment with the electronic payment terminal becomes impossible;
a step of receiving payment information including the usage amount within the set maximum and the store information, and executing the preliminary payment; and
a step of transmitting the payment information corresponding to the executed preliminary payment.
